# EUROPÄISCHE PATENTSCHRIFT

(11) **EP 2 561 255 B1**
(45) Veröffentlichungstag und Bekanntmachung des Hinweises auf die Patenterteilung: **04.06.2014**
(21) Anmeldenummer: 11720982.5
(22) Anmeldetag: 18.04.2011
(51) Int. Cl.: F16J 15/34

(54) **GLEITRINGDICHTUNG**
SLIP RING SEAL
BAGUE COLLECTRICE D'ÉTANCHÉITÉ

(30) Priorität: 18.06.2010 DE 102010024289; 23.04.2010 DE 102010018308
(43) Veröffentlichungstag der Anmeldung: 27.02.2013
(73) Patentinhaber: Carl Freudenberg KG, 69469 Weinheim (DE)
(72) Erfinder: KIRCHHOF, Martin, 83714 Miesbach (DE); LAXANDER, Armin, 82067 Ebenhausen (DE); LEDERER, Günther, 82538 Geretsried (DE); KELLER, Thomas, 82538 Geretsried (DE)
(86) Internationale Anmeldenummer: PCT/EP2011/001956
(87) Internationale Veröffentlichungsnummer: WO 2011/131329

(56) Entgegenhaltungen:
- EP-A1- 0 591 586
- EP-A2- 0 265 147
- DE-U1- 20 019 881

## Beschreibung

### Technisches Gebiet

Die Erfindung betrifft eine Gleitringdichtung gemäß dem Oberbegriff des Patentanspruchs 1.

### Stand der Technik

Gleitringdichtungen der eingangs genannten Art sind aus der DE 200 19 881 U1 bereits bekannt.

Ein Gegenring kann mit Gleitgeschwindigkeiten bezogen auf den mittleren Gleitflächendurchmesser von bis zu 200 m/s relativ zum stationären Gleitring rotieren. Bei hohen Gleitgeschwindigkeiten kommt es infolge von viskoser Reibung im Dichtspalt zu einem erheblichen Wärmeeintrag in Gleit- und Gegenring. Axiale Temperaturgradienten in Gleit- und Gegenring können zu großen Verformungen der Ringe führen. Dabei kann sich die Geometrie des Dichtspalts in unerwünschter Weise bzw. unzulässiger Weise verändern und zwar hinsichtlich der Höhe des Dichtspalts als auch dessen V-förmiger Aufweitung.

Aus der EP 1 209 386 A1 ist bekannt, einen rotierenden Gegenring mit einer axialen Ausstülpung zu versehen, um thermisch bedingte Verwerfungen des rotierenden Gegenrings zu kompensieren.

Bei den bekannten Gleitringdichtungen ist nachteilig, dass das Verformungsverhalten des rotierenden Gegenrings trotz der bekannten Maßnahmen bei hoher Temperaturentwicklung nicht immer in allen auftretenden Betriebszuständen eine zuverlässige Funktion zulässt.

Insbesondere bei der Verwendung von Gleitringdichtungen in Turbomaschinen, beispielsweise Kompressoren oder Gasturbinen, mit stark variierenden Betriebsbedingungen hinsichtlich Druck, Drehzahl und Temperatur bestehen jedoch sehr hohe Anforderungen an Funktion und Betriebssicherheit der Gleitringdichtungen.

### Darstellung der Erfindung

Der Erfindung liegt daher die Aufgabe zugrunde, eine Gleitringdichtung der eingangs genannten Art derart auszugestalten und weiterzubilden, dass diese auch bei variierenden und unterschiedlichen Gleitgeschwindigkeiten, Drehzahlen, Drücken und Temperaturen eine zuverlässige Funktion und hohe Betriebssicherheit gewährleistet.

Die vorliegende Erfindung löst die zuvor genannte Aufgabe durch die Merkmale des Patentanspruchs 1. Vorteilhafte Ausgestaltungen sind in den abhängigen Ansprüchen angegeben.

Der Gegenring weist eine erste axiale Ausstülpung auf, welche von einer Radialebene des Gegenrings abragt, wobei der Gegenring eine zweite axiale Ausstülpung aufweist, welche von der Radialebene abragt und von der ersten Ausstülpung beabstandet ist.

Eine zweite Ausstülpung, welche mit der ersten Ausstülpung ein Tal ausbildet, kann die auftretenden Kippmomente infolge axialer Temperaturgradienten kompensieren. Obwohl der Fachmann erwarten würde, dass eine weitere Ausstülpung zu einem relativ komplexen, schwer beherrschbaren Verformungsverhalten des Gegenrings führen würde, könnte dieser Weg beschritten werden. Die erste Ausstülpung steht dann bei rotierendem Gegenring in einem sensiblen Wechselspiel zu der zweiten Ausstülpung. Hierdurch zeigt der Gegenring auch bei stark variierenden Belastungen in Bezug auf Druck, Drehzahl und Temperatur überraschend in gleichem Maße sowohl Flexibilität als auch Stabilität im Hinblick auf sein Verformungsverhalten. Dadurch wird auch bei stark variierenden Betriebsbedingungen eine optimale Geometrie des Dichtspalts aufrecht erhalten.

Die Radialebene könnte der Dichtfläche des Gegenrings abgewandt sein. Vorteilhaft werden hierbei die aneinander liegenden Dichtflächen nicht beeinflusst.

Die erste Ausstülpung könnte am radial äußeren Ende des Gegenrings ausgebildet sein, wobei die zweite Ausstülpung dem radial inneren Ende des Gegenrings zugewandt ist. Hierdurch wird die Rotationsebene des Gegenrings gegen Verkippungen stabilisiert.

Die erste Ausstülpung könnte im Querschnitt trapezförmig ausgebildet sein. Diese konkrete Ausgestaltung hat sich als besonders vorteilhaft erwiesen, da es hierdurch zu einer positiven Massenverteilung und Schwerpunktverschiebung innerhalb des Gegenrings kommt.

Vor diesem Hintergrund könnte die zweite Ausstülpung im Querschnitt trapezförmig ausgebildet sein. Hierdurch werden parallel zur Rotationsachse orientierte Ebenen vermieden, auf denen sich Fluide, insbesondere flüssige Schmiermittel, anlagern können.

Die Ausstülpungen könnten abgerundete Kanten aufweisen. Hierdurch können Sekundärwirbelabrisse an den Ausstülpungen minimiert werden.

Die erste Ausstülpung könnte eine größere Ausdehnung zeigen als die zweite Ausstülpung. Überraschend ergibt sich hierdurch ein gleichermaßen flexibles als auch stabiles Verformungsverhalten des rotierenden Gegenrings bei unterschiedlichsten Betriebsbedingungen.

Aus der EP 1 209 386 A1 ist bekannt, einen rotierenden Gegenring mit einer axialen Ausstülpung zu versehen, um thermisch bedingte Verwerfungen des rotierenden Gegenrings zu kompensieren.

Bei den bekannten Gleitringdichtungen ist nachteilig, dass das Verformungsverhalten des rotierenden Gegenrings trotz der bekannten Maßnahmen bei hoher Temperaturentwicklung nicht immer in allen auftretenden Betriebszuständen eine zuverlässige Funktion zulässt.

Insbesondere bei der Verwendung von Gleitringdichtungen in Turbomaschinen, beispielsweise Kompressoren oder Gasturbinen, mit stark variierenden Betriebsbedingungen hinsichtlich Druck, Drehzahl und Temperatur bestehen jedoch sehr hohe Anforderungen an Funktion und Betriebssicherheit der Gleitringdichtungen.

Vor diesem Hintergrund könnte der Gleitring eine axiale Ausbuchtung aufweisen, deren radial innere Flanke Ausnehmungen aufweist.

Überraschend stellt sich hierdurch eine nahezu konstante Spaltbreite ein. Der stationäre Gleitring folgt in seinem Bewegungs- und Verformungsverhalten dem rotierenden Gegenring derart, dass sich der Dichtspalt zwischen den Dichtflächen nicht aufweitet oder in unzulässiger Weise verkleinert. Die Ausnehmungen stehen bei rotierendem Gegenring in einem sensiblen Wechselspiel zu diesem, wodurch der Gegenring überraschend stabil und ruhig rotiert und der Gleitring diesem axial folgt. Die stabile und ruhige Rotation führt zu einer sehr hohen Dichtheit und einer optimierten Spaltbreite zwischen den Dichtflächen.

Soweit in dieser Beschreibung von Spaltbreite die Rede ist, ist der axiale Abstand der Dichtflächen gemeint. Der Fachmann bezeichnet diesen axialen Abstand auch als "Spalthöhe". In den Ausnehmungen sind keine Dichtungen oder Dichtelemente angeordnet. Die Ausnehmungen sind auch frei von Zentrierelementen, die axial oder radial an der radial inneren Flanke anliegen.

Die radial innere Flanke könnte gestuft ausgebildet sein. Stufen lassen sich problemlos in den Körper des Gleitrings einbringen.

Die radial innere Flanke könnte in eine erste Radialebene des Gleitrings münden, wobei eine radial äußere Flanke des Gleitrings auf einer zweiten Radialebene des Gleitrings mündet und wobei die erste und die zweite Radialebene unterschiedlich weit von der Dichtfläche des Gleitrings beabstandet sind. Durch diese konkrete Ausgestaltung stellt sich eine sehr günstige Form des Gleitrings ein, so dass der Dichtspalt zwischen den Dichtflächen nahezu konstant ist.

Aus der EP 1 209 386 A1 ist bekannt, einen der Dichtfläche des Gleitrings zugewandten Raum gegen einen gehäuseseitigen Raum abzudichten, in welchem der Druckring angeordnet ist. Die Abdichtung wird durch eine Dichteinrichtung realisiert, welche ein einziges Dichtelement umfasst. Das Dichtelement liegt zugleich am Druckring, am Gleitring und an der zweiten Gehäusewandung an.

Bei der bekannten Gleitringdichtung ist nachteilig, dass das Dichtelement die Bewegungsfreiheit des Gleitrings einschränkt. Hierbei kann es insbesondere zu einem "Stick-Slip-Verhalten" kommen.

Insbesondere bei der Verwendung von Gleitringdichtungen in Turbomaschinen, beispielsweise Kompressoren und Gasturbinen, mit stark variierenden Betriebsbedingungen hinsichtlich Druck, Drehzahl und Temperatur bestehen jedoch sehr hohe Anforderungen an Funktion und Betriebssicherheit der Gleitringdichtungen.

Hierbei ist wünschenswert, eine Gleitringdichtung der eingangs genannten Art derart auszugestalten und weiterzubilden, dass diese auch bei variierenden und unterschiedlichen Drehzahlen, Drücken und Temperaturen eine zuverlässige Funktion und Betriebssicherheit gewährleistet.

Vor diesem Hintergrund könnte der Gleitring durch einen Druckring gegen den Gegenring gepresst sein, wobei sich der Druckring mittels eines Federelements gegen eine erste Gehäusewand abstützt, wobei zwischen dem Druckring und einer zweiten Gehäusewand sowie zwischen dem Druckring und dem Gleitring eine Dichteinrichtung vorgesehen ist und wobei die Dichteinrichtung zwei voneinander entkoppelte und separate Dichtelemente aufweist.

Zwei voneinander entkoppelte und getrennte Dichtelemente können unterschiedliche Dichtaufgaben durch unterschiedliche Werkstoffauswahl in optimaler Weise erfüllen. Dabei ist insbesondere erkannt worden, dass die Dichtelemente hinsichtlich ihrer Elastizitätseigenschaften und morphologischen Eigenschaften unabhängig voneinander an ihre jeweilige Einbausituation angepasst werden können. Hierdurch zeigt der Gleitring auch bei stark variierenden Belastungen in Bezug auf Druck, Drehzahl und Temperatur überraschend in gleichem Maße sowohl Flexibilität als auch Stabilität im Hinblick auf sein Bewegungsverhalten. Dadurch wird auch bei stark variierenden Betriebsbedingungen eine optimale Geometrie des Dichtspalts aufrecht erhalten.

Vor diesem Hintergrund könnte ein erstes Dichtelement ausschließlich am Gleitring und am Druckring anliegen. Hierdurch kann eine zuverlässige Abdichtung zwischen den sich axial gegenüberliegenden Grenzflächen des Gleitrings und des Druckrings erzielt werden.

Ein zweites Dichtelement könnte ausschließlich am Druckring und an der zweiten Gehäusewand anliegen. Hierdurch kann eine zuverlässige Abdichtung zwischen den sich radial gegenüberliegenden Grenzflächen des Druckrings und des Gehäuses erzielt werden.

Das erste Dichtelement könnte aus einem Elastomer gefertigt sein. Ein Elastomer ist üblicherweise hinreichend weich und kann daher sehr zuverlässig zwischen den sich axial gegenüberliegenden Grenzflächen des Gleitrings und des Druckrings abdichten.

Das zweite Dichtelement könnte aus Polytetrafluorethylen (PTFE) gefertigt sein. Dieser Werkstoff haftet vorteilhaft nicht an der zweiten Gehäusewand an und verleiht dem Druckring eine gewisse Beweglichkeit relativ zum Gehäuse.

Das zweite Dichtelement könnte zumindest bereichsweise im Querschnitt U-förmig ausgestaltet sein. Hierdurch kann das zweite Dichtelement eine Spreizwirkung entfalten. Eine U-Form bedingt zwei abragende Schenkel, die sich jeweils gegen den Druckring und die zweite Gehäusewand unter Anpressdruck anlegen können.

Aus der EP 1 209 386 A1 ist bekannt, einen der Dichtfläche des Gleitrings zugewandten Raum gegen einen gehäuseseitigen Raum abzudichten, in welchem der Druckring angeordnet ist. Die Abdichtung wird durch eine Dichteinrichtung realisiert, welche ein einziges Dichtelement umfasst. Das Dichtelement liegt zugleich am Druckring, am Gleitring und an der zweiten Gehäusewandung an.

Bei der bekannten Gleitringdichtung ist nachteilig, dass in den gehäuseseitigen Raum Verschmutzungen eintreten können. Die Verschmutzungen können von der dem Gleitring abgewandten Seite her eintreten.

Hierbei kann es zu Reibungsschäden aufgrund eintretender Schmutzpartikel, insbesondere aufgrund eintretenden Staubs, kommen. Dies kann zu ungünstigen Veränderungen der Oberflächenbeschaffenheit zwischen Dichtelement und Gehäuse führen. Hiermit kann eine Verschlechterung des Verschiebeverhaltens des Druckrings relativ zum Gehäuse einhergehen. In der Folge können ungünstige Veränderungen der Geometrie des Dichtspalts auftreten.

Insbesondere bei der Verwendung von Gleitringdichtungen in Turbomaschinen, beispielsweise Kompressoren und Gasturbinen mit stark variierenden Betriebsbedingungen hinsichtlich Druck, Drehzahl und Temperatur bestehen jedoch sehr hohe Anforderungen an Funktion und Betriebssicherheit der Gleitringdichtungen.

Hierbei ist wünschenswert, eine Gleitringdichtung der eingangs genannten Art derart auszugestalten und weiterzubilden, dass diese auch bei variierenden und unterschiedlichen Drehzahlen, Drücken und Temperaturen eine zuverlässige Funktion und Betriebssicherheit gewährleistet.

Vor diesem Hintergrund könnte der Gleitring durch einen Druckring gegen den Gegenring gepresst sein, wobei sich der Druckring mittels eines Federelements gegen eine erste Gehäusewand abstützt, wobei zwischen dem Druckring und einer zweiten Gehäusewand sowie zwischen dem Druckring und dem Gleitring eine Dichteinrichtung vorgesehen ist und wobei der Druckring gemeinsam mit den Gehäusewänden einen Raum begrenzt, der gegen eindringende Verschmutzungen abgeschirmt ist.

Eine Abschirmung verhindert das Eintreten von Verschmutzungen. Die Oberflächenbeschaffenheit zwischen Dichtelement und Gehäuse wird hierdurch nahezu nicht negativ beeinträchtigt. Somit kann einer Verschlechterung des Verschiebeverhaltens des Druckrings relativ zum Gehäuse positiv entgegengewirkt werden. In der Folge können ungünstige Veränderungen der Geometrie des Dichtspalts vermieden werden. Dadurch wird auch bei stark variierenden Betriebsbedingungen eine optimale Geometrie des Dichtspalts aufrecht erhalten.

Der Druckring könnte eine axial abragende Ringwand aufweisen, deren radial äußere Oberfläche dem radial inneren Ende der ersten Gehäusewand gegenüberliegt. Hierdurch ist eine Kammerung des Druckrings und des Federelements in einem gehäuseseitigen Ringraum realisiert. Vorteilhaft können bei einem Bruch des Federelements keine Bruchstücke nach aussen gefördert werden.

Die Ringwand könnte die erste Gehäusewand in axialer Richtung überragen. Ein Überstand verhindert zuverlässig das Eindringen von Staub in den Raum, in dem das Federelement aufgenommen ist.

In der ersten und/ oder der zweiten Gehäusewand könnte ein Durchgang ausgebildet sein, durch welchen bereits vorhandene Verschmutzungen aus dem Raum austreten können. Der Durchgang ist vorteilhaft auf der dem Gleitring abgewandten Seite hinter dem Druckring ausgebildet. Indem der Durchgang in einem unteren Bereich des Gehäuses ausgebildet ist, können bereits eingetretene Verschmutzungen durch Schwerkraft aus dem Raum austreten.

Vor diesem Hintergrund ist aus der EP 1 209 386 A1 bekannt, einen rotierenden Gegenring auf einer Welle drehfest mit einer Buchse und einem Einspannelement zu verspannen.

Bei den bekannten Gleitringdichtungen ist nachteilig, dass der rotierende Gegenring während der Rotation unerwünschte Verkippungen ausführen kann. Hierbei kann es zu unerwünschten Veränderungen der Geometrie des Dichtspalts zwischen den Dichtflächen kommen. Die Gleitringdichtung kann dann nicht mehr während aller auftretenden Betriebszustände eine zuverlässige Funktion gewährleisten.

Insbesondere bei der Verwendung von Gleitringdichtungen in Turbomaschinen, beispielsweise Kompressoren oder Gasturbinen, mit stark variierenden Betriebsbedingungen hinsichtlich Druck, Drehzahl und Temperatur bestehen jedoch sehr hohe Anforderungen an Funktion und Betriebssicherheit der Gleitringdichtungen.

Hierbei ist wünschenswert, eine Gleitringdichtung der eingangs genannten Art derart auszugestalten und weiterzubilden, dass diese auch bei variierenden und unterschiedlichen Drehzahlen, Drücken und Temperaturen eine zuverlässige Funktion und Betriebssicherheit gewährleistet.

Vor diesem Hintergrund könnte der Gegenring zwei Radialebenen aufweisen, denen jeweils ein Einspannnocken zugeordnet ist.

Durch axial abragende Einspannnocken kann eine definierte Einspannung des Gegenrings sichergestellt werden. Auftretende Kippmomente können überraschend leicht kompensiert und vermieden werden. Dabei ist zunächst erkannt worden, dass ein zwischen Einspannelementen eingespannter Gegenring mit diesen in Reibkontakt treten kann. Hierbei treten Reibkräfte auf, welche Kippmomente bewirken. Darauf ist erkannt worden, dass Einspannnocken derart angeordnet werden können, dass angreifende Kippmomente sich gegenseitig kompensieren. Hierbei ist konkret erkannt worden, dass die Einspannnocken eine Ebene definieren, an denen die Kippmomente definiert und kompensierbar angreifen können. Überraschend zeigt der Gegenring daher auch bei stark variierenden Belastungen in Bezug auf Druck, Drehzahl und Temperatur ein hohes Maß an Stabilität im Hinblick auf sein Verkippungsverhalten. Dadurch wird auch bei stark variierenden Betriebsbedingungen eine optimale Geometrie des Dichtspalts aufrecht erhalten.

Unter Zuordnung der Einspannnocken zu den Radialebenen wird entweder eine Ausbildung der Einspannnocken am Gegenring direkt oder an den Einspannelementen der Welle verstanden.

Der Gegenring könnte zwei Radialebenen aufweisen von denen jeweils ein Einspannnocken in axialer Richtung abragt. Vorteilhaft sind die Einspannnocken am Gegenring und nicht an der Buchse und dem Einspannelement ausgebildet. Dies hängt damit zusammen, dass das für den Gegenring verwendete Material weicher ist als die Materialien für die Buchse bzw. das Einspannelement. Des Weiteren wird eine gleichmäßige Abnutzung der Einspannnocken angestrebt.

Die Einspannnocken könnten ringförmig und konzentrisch zum Gegenring ausgebildet sein. Hierdurch kann der Gegenring über eine Linienpressung auf der Welle verankert werden.

Die Einspannnocken könnten aus dem Gegenring herausgebildet und mit diesem einstückig ausgebildet sein.

Die Einspannnocken könnten beidseitig des Gegenrings in radialer Richtung auf gleicher Höhe ausgebildet sein. Hierdurch ist sichergestellt, dass auftretende Kippmomente auf der gleichen Ebene angreifen und sich vorteilhaft gegenseitig kompensieren können.

Sobald sich nämlich der Gegenring und die Welle radial relativ zueinander bewegen, treten Kippmomente auf. Diese Kippmomente werden dadurch kompensiert, dass die Einspannnocken auf gleicher radialer Höhe angeordnet sind.

Eine Anordnung könnte eine Gleitringdichtung der hier beschriebenen Art und eine Welle aufweisen, wobei der Gegenring mit der Welle mittels eines Einspannelements und einer Buchse drehfest verbunden ist und wobei ein erster Einspannnocken an der Buchse und der zweite Einspannnocken am Einspannelement anliegt. Durch die Buchse und das Einspannelement kann der Gegenring definiert auf der Welle eingespannt werden.

Die hier beschriebene Gleitringdichtung eignet sich in besonderer Weise zur Verwendung in Turbomaschinen, beispielsweise Kompressoren oder Gasturbinen, da diese auch bei variierenden und unterschiedlichen Gleitgeschwindigkeiten, Drücken und Temperaturen eine zuverlässige Funktion gewährleistet.

Die hier beschriebene Gleitringdichtung dichtet ein Gas oder ein Gemisch aus einem Gas und einer Flüssigkeit ab, wobei die Dichtflächen gasgeschmiert sind.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Gleitringdichtung an Hand der Zeichnung zu verweisen.

In Verbindung mit der Erläuterung des bevorzugten Ausführungsbeispiels an Hand der Zeichnung werden im Allgemeinen bevorzugte Ausgestaltungen und Weiterbildungen der Lehre erläutert.

### Kurzbeschreibung der Zeichnung

In der Zeichnung zeigen
- Fig. 1: eine Schnittansicht einer Gleitringdichtung des Stands der Technik,
- Fig. 2: eine Schnittansicht des gehäuseseitigen Teils der Gleitringdichtung gemäß Fig. 1,
- Fig. 3: eine Schnittansicht eines wellenseitigen Teils einer Gleitringdichtung, bei welcher der rotierende Gegenring in axialer Richtung zwei Ausstülpungen aufweist,
- Fig. 4: eine Schnittansicht eines gehäuseseitigen Teils einer Gleitringdichtung, bei welcher der stationäre Gleitring eine axiale Ausbuchtung aufweist, in weicher eine gestufte Flanke ausgebildet ist,
- Fig. 5: eine Schnittansicht einer Gleitringdichtung des Stands der Technik, bei welcher dem Druckring ein einziges Dichtelement zugeordnet ist,
- Fig. 6: eine Schnittansicht einer Gleitringdichtung, bei welcher dem Druckring zwei separate, voneinander entkoppelte Dichtelemente zugeordnet sind,
- Fig. 7: eine Schnittansicht einer Gleitringdichtung des Stands der Technik, bei welcher dem Druckring ein einziges Dichtelement zugeordnet ist,
- Fig. 8: eine Schnittansicht einer Gleitringdichtung, bei welcher dem Druckring eine axial abragende Ringwand zugeordnet ist,
- Fig. 9: eine Schnittansicht einer Gleitringdichtung des Stands der Technik, bei welcher der rotierende Gegenring in axialer Richtung keine Einspannnocken aufweist, und
- Fig. 10: eine Schnittansicht eines wellenseitigen Teils einer Gleitringdichtung, bei welcher der Gegenring beidseitig abragende Einspannnocken aufweist.

### Ausführung der Erfindung

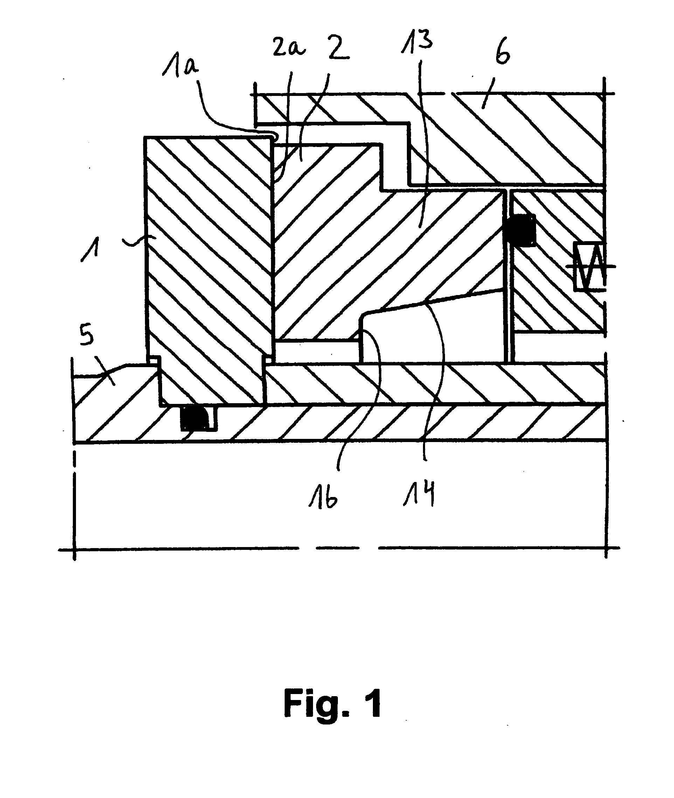

Fig. 1 zeigt eine Gleitringdichtung des Stands der Technik.

Die in Fig. 1 gezeigte Gleitringdichtung umfasst einen rotierenden Gegenring 1 und einen stationären Gleitring 2, wobei der Gegenring 1 und der Gleitring 2 jeweils aneinander liegende Dichtflächen 1 a, 2a aufweisen, wobei die Dichtfläche 1 a des Gegenrings 1 der Dichtfläche 2a des Gleitrings 2 gegenüberliegt.

Der rotierende Gegenring 1 ist einer drehenden Welle 5 fest zugeordnet und rotiert mit dieser. Der stationäre Gleitring 2 ist in einem Gehäuse 6 lose zentriert angeordnet.

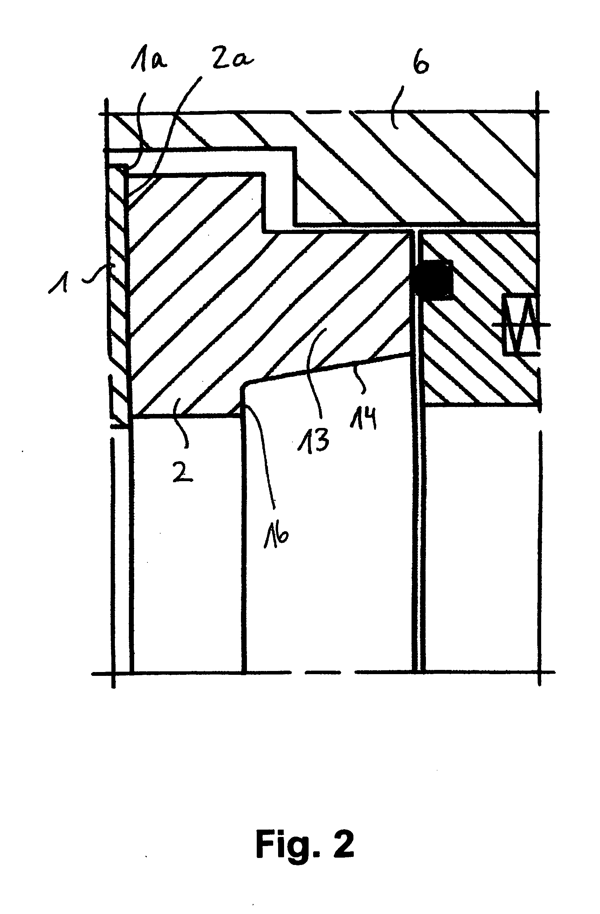

Fig. 2 zeigt den gehäuseseitigen Teil der Gleitringdichtung gemäß Fig. 1.

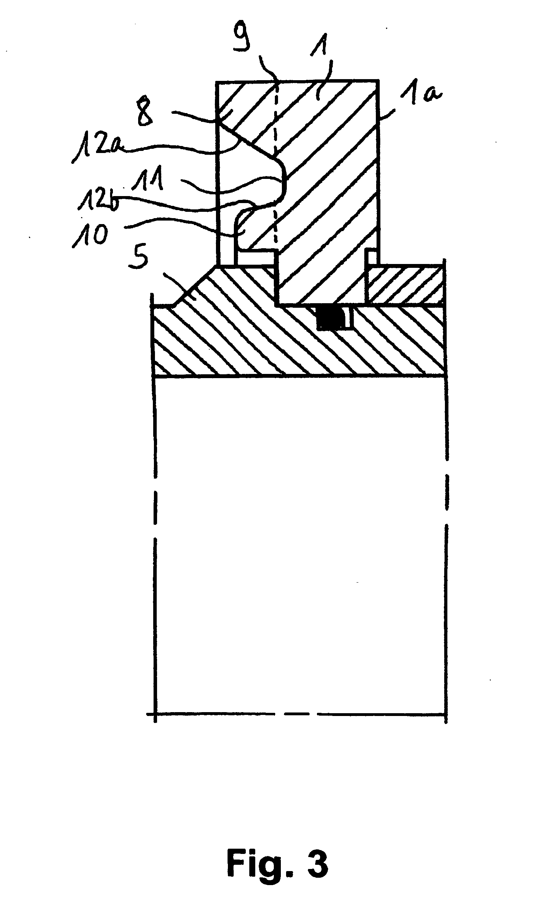

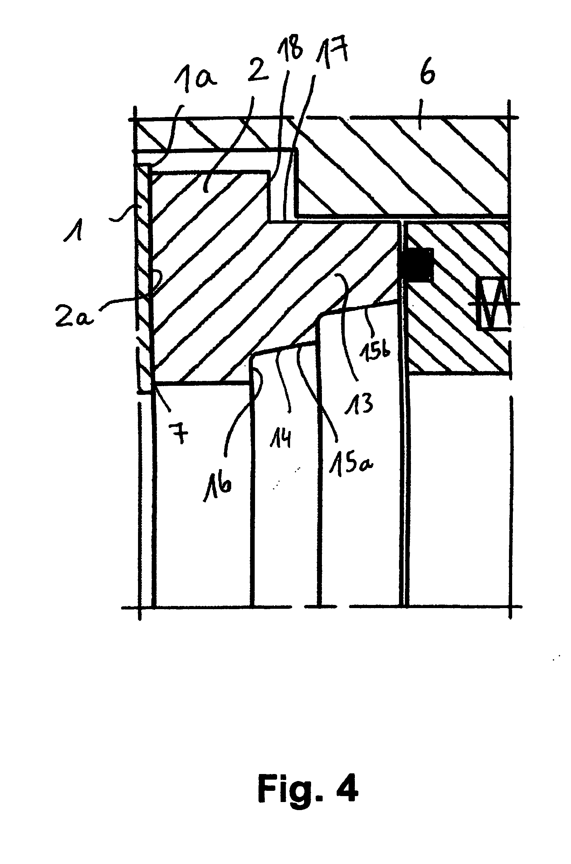

Fig. 3 zeigt einen wellenseitigen Teil einer Gleitringdichtung und Fig. 4 zeigt einen gehäuseseitigen Teil einer Gleitringdichtung. Dabei kann der gehäuseseitige Teil gemäß Fig. 4 mit dem wellenseitigen Teil gemäß Fig. 3 oder dem wellenseitigen Teil gemäß Fig. 1 kombiniert werden.

Die in Fig. 3 und Fig. 4 gezeigte Gleitringdichtung umfasst einen rotierenden Gegenring 1 und einen stationären Gleitring 2, wobei der Gegenring 1 und der Gleitring 2 jeweils aneinander liegende Dichtflächen 1a, 2a aufweisen, wobei die Dichtfläche 1a des Gegenrings 1 der Dichtfläche 2a des Gleitrings 2 gegenüberliegt. Hierbei wird ein Dichtspalt 7 zwischen den Dichtflächen 1 a, 2a ausgebildet. Der rotierende Gegenring 1 ist einer drehenden Welle 5 fest zugeordnet und rotiert mit dieser. Der stationäre Gleitring 2 ist in einem Gehäuse 6 lose zentriert angeordnet.

Der Gegenring 1 weist eine erste axiale Ausstülpung 8 auf, welche von einer gestrichelt dargestellten Radialebene 9 des Gegenrings 1 axial abragt. Der Gegenring 1 weist eine zweite axiale Ausstülpung 10 auf, welche von der Radialebene 9 axial abragt und von der ersten Ausstülpung 8 radial beabstandet ist.

Konkret begrenzen die erste Ausstülpung 8 und die zweite Ausstülpung 10 ein Tal 11, welches etwas tiefer liegt als die Radialebene 9. Das Tal 11 könnte jedoch auch etwas höher liegen als die Radialebene 9. Der Gegenring 1 ist aus Metall gefertigt und weist einen Durchmesser (Innenmass) von 300 mm auf.

Die Radialebene 9 ist der Dichtfläche 1 a des Gegenrings 1 axial abgewandt. Die erste Ausstülpung 8 ist am radial äußeren Ende des Gegenrings 1 ausgebildet, wobei die zweite Ausstülpung 10 dem radial inneren Ende des Gegenrings 1 zugewandt ist.

Die erste Ausstülpung 8 und die zweite Ausstülpung 10 sind im Querschnitt trapezförmig ausgebildet. Die Ausstülpungen 8, 10 weisen abgerundete Kanten 12a, 12b auf.

Die erste Ausstülpung 8 zeigt eine größere Ausdehnung als die zweite Ausstülpung 10.

Fig. 4 zeigt, dass der Gleitring 2 eine axiale Ausbuchtung 13 aufweist, deren radial innere Flanke 14 Ausnehmungen 15a, 15b aufweist. Die radial innere Flanke 14 ist gestuft ausgebildet.

Die radial innere Flanke 14 mündet in eine erste Radialebene 16 des Gleitrings 2, wobei eine radial äußere Flanke 17 des Gleitrings 2 in eine zweite Radialebene 18 des Gleitrings 2 mündet und wobei die erste und die zweite Radialebene 16, 18 unterschiedlich weit von der Dichtfläche 2a des Gleitrings 2 axial beabstandet sind.

Der Gleitring 2 ist aus einem Kohlewerkstoff gefertigt.

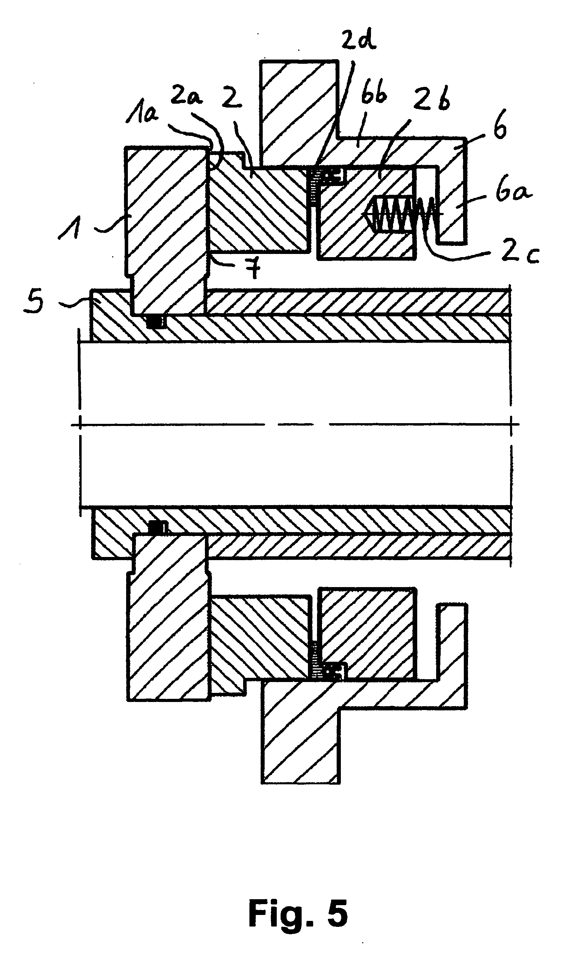

Fig. 5 zeigt eine Gleitringdichtung des Stands der Technik.

Die in Fig. 5 gezeigte Gleitringdichtung umfasst einen rotierenden Gegenring 1 und einen stationären Gleitring 2, wobei der Gegenring 1 und der Gleitring 2 jeweils aneinander liegende Dichtflächen 1a, 2a aufweisen, wobei die Dichtfläche 1 a des Gegenrings 1 der Dichtfläche 2a des Gleitrings 2 gegenüberliegt, wobei der Gleitring 2 durch einen Druckring 2b gegen den Gegenring 1 gepresst ist, wobei sich der Druckring 2b mittels eines Federelements 2c gegen eine erste Gehäusewand 6a abstützt und wobei zwischen dem Druckring 2b und einer zweiten Gehäusewand 6b sowie zwischen dem Druckring 2b und dem Gleitring 2 eine Dichteinrichtung 2d vorgesehen ist.

Der rotierende Gegenring 1 ist einer drehenden Welle 5 fest zugeordnet und rotiert mit dieser. Der stationäre Gleitring 2 ist in einem Gehäuse 6 lose zentriert angeordnet. Hierbei wird ein Dichtspalt 7 zwischen den Dichtflächen 1a, 2a ausgebildet.

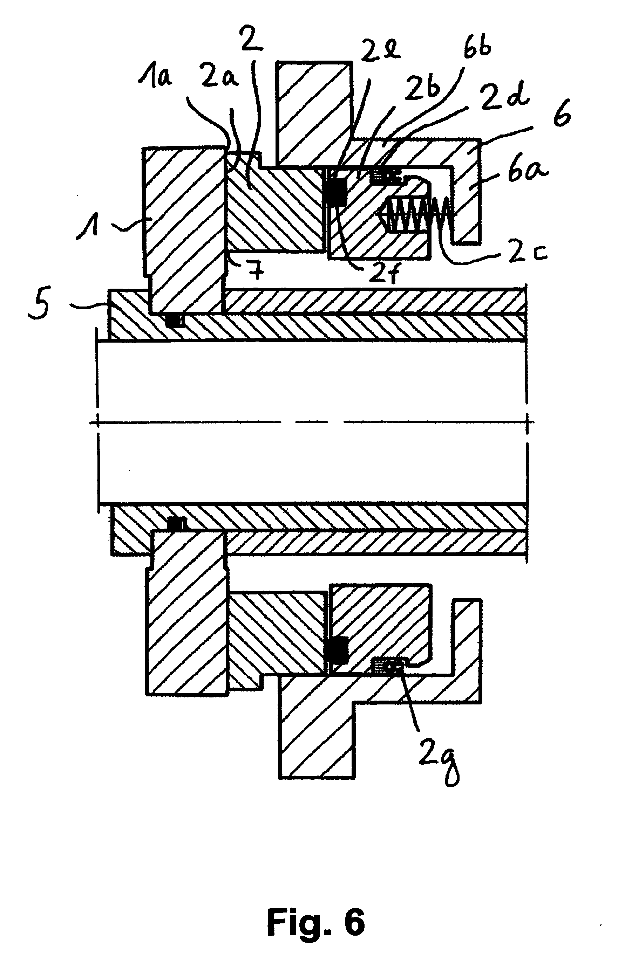

Fig. 6 zeigt eine Gleitringdichtung, welche einen rotierenden Gegenring 1 und einen stationären Gleitring 2 umfasst, wobei der Gegenring 1 und der Gleitring 2 jeweils aneinander liegende Dichtflächen 1 a, 2a aufweisen, wobei die Dichtfläche 1a des Gegenrings 1 der Dichtfläche 2a des Gleitrings 2 axial gegenüberliegt, wobei der Gleitring 2 durch einen Druckring 2b axial gegen den Gegenring 1 gepresst ist, wobei sich der Druckring 2b mittels eines Federelements 2c axial gegen eine erste Gehäusewand 6a abstützt und wobei zwischen dem Druckring 2b und einer zweiten Gehäusewand 6b sowie zwischen dem Druckring 2b und dem Gleitring 2 eine Dichteinrichtung 2d, 2e vorgesehen ist, wobei die Dichteinrichtung 2d, 2e zwei voneinander entkoppelte und separate Dichtelemente 2d, 2e aufweist.

Ein erstes Dichtelement 2e liegt ausschließlich am Gleitring 2 und am Druckring 2b an. Ein zweites Dichtelement 2d liegt ausschließlich am Druckring 2b und an der zweiten Gehäusewand 6b an.

Das erste Dichtelement 2e ist aus einem Elastomer gefertigt. Das erste Dichtelement 2e befindet sich in einer Nut 2f des Druckrings 2b, welche dem Gleitring 2 axial zugewandt ist. Das erste Dichtelement 2e ist als O-Ring ausgestaltet.

Das zweite Dichtelement 2d ist aus Polytetrafluorethylen (PTFE) gefertigt. Das zweite Dichtelement 2d ist zumindest bereichsweise im Querschnitt U-förmig ausgestaltet. Hierbei ist auch eine V-förmige Ausgestaltung denkbar. Es umgibt den Druckring 2b umfänglich und liegt in einer peripher umlaufenden Ringnut 2g.

Der Gegenring 1 ist aus Metall gefertigt und weist einen Durchmesser (Innenmass) von 300 mm auf. Der Gleitring 2 ist aus einem Kohlewerkstoff gefertigt.

Der rotierende Gegenring 1 ist einer drehenden Welle 5 fest zugeordnet und rotiert mit dieser. Der stationäre Gleitring 2 ist in einem Gehäuse 6 lose zentriert angeordnet. Hierbei wird ein Dichtspalt 7 zwischen den Dichtflächen 1 a, 2a ausgebildet.

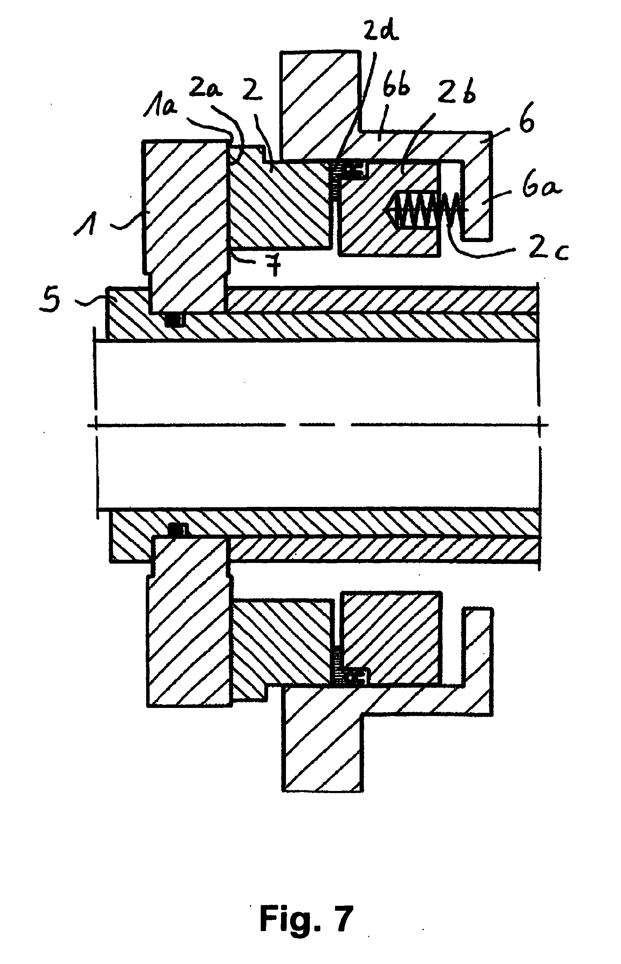

Fig. 7 zeigt eine Gleitringdichtung des Stands der Technik.

Die in Fig. 7 gezeigte Gleitringdichtung umfasst einen rotierenden Gegenring 1 und einen stationären Gleitring 2, wobei der Gegenring 1 und der Gleitring 2 jeweils aneinander liegende Dichtflächen 1 a, 2a aufweisen, wobei die Dichtfläche 1 a des Gegenrings 1 der Dichtfläche 2a des Gleitrings 2 gegenüberliegt, wobei der Gleitring 2 durch einen Druckring 2b gegen den Gegenring 1 gepresst ist, wobei sich der Druckring 2b mittels eines Federelements 2c gegen eine erste Gehäusewand 6a abstützt und wobei zwischen dem Druckring 2b und einer zweiten Gehäusewand 6b sowie zwischen dem Druckring 2b und dem Gleitring 2 eine Dichteinrichtung 2d vorgesehen ist.

Der rotierende Gegenring 1 ist einer drehenden Welle 5 fest zugeordnet und rotiert mit dieser. Der stationäre Gleitring 2 ist in einem Gehäuse 6 lose zentriert angeordnet. Hierbei wird ein Dichtspalt 7 zwischen den Dichtflächen 1 a, 2a ausgebildet.

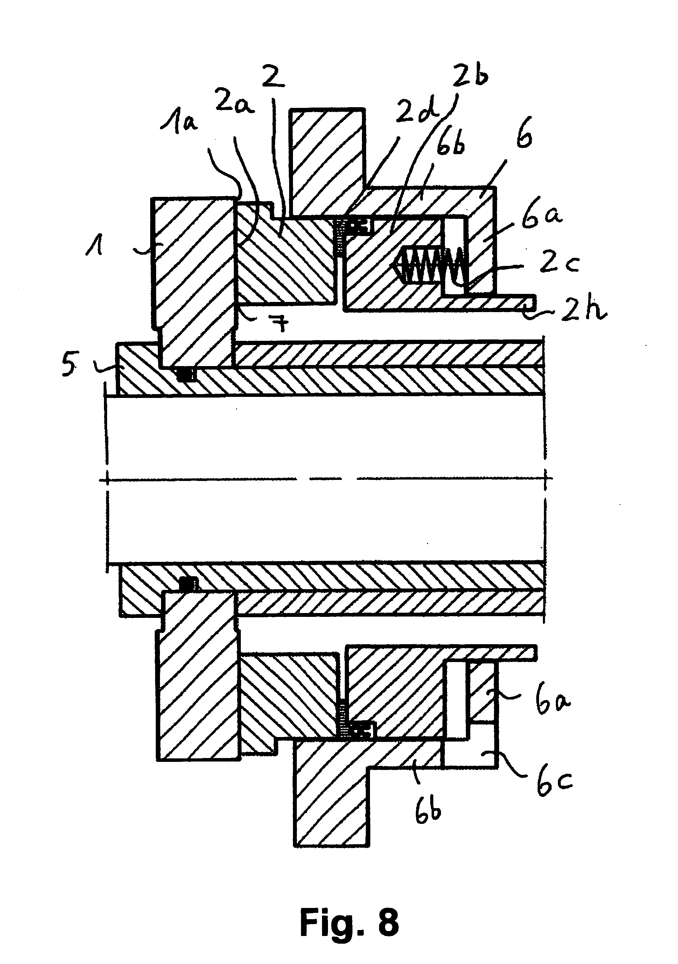

Fig. 8 zeigt eine Gleitringdichtung, welche einen rotierenden Gegenring 1 und einen stationären Gleitring 2 umfasst, wobei der Gegenring 1 und der Gleitring 2 jeweils aneinander liegende Dichtflächen 1a, 2a aufweisen, wobei die Dichtfläche 1a des Gegenrings 1 der Dichtfläche 2a des Gleitrings 2 axial gegenüberliegt, wobei der Gleitring 2 durch einen Druckring 2b gegen den Gegenring 1 gepresst ist, wobei sich der Druckring 2b mittels eines Federelements 2c gegen eine erste Gehäusewand 6a abstützt und wobei zwischen dem Druckring 2b und einer zweiten Gehäusewand 6b sowie zwischen dem Druckring 2b und dem Gleitring 2 eine Dichteinrichtung 2d vorgesehen ist.

Der Druckring 2b begrenzt gemeinsam mit den Gehäusewänden 6a, 6b einen Raum, der gegen eindringende Verschmutzungen abgeschirmt ist. Der Raum ist auf der dem Gleitring 2 abgewandten Seite des Druckrings 2b ausgebildet. Der Raum, nämlich der gehäuseseitige Raum, ist als Ringraum ausgestaltet, in welchem das Federelement 2c aufgenommen ist.

Der Druckring 2b weist eine axial abragende Ringwand 2h auf, deren radial äußere Oberfläche dem radial inneren Ende der ersten Gehäusewand 6a gegenüberliegt. Dabei ragt die Ringwand 2h in gleicher Richtung ab, in der das Federelement 2c vom Druckring 2b abragt. Das Federelement 2c ist in einer Sackbohrung im Druckring 2b aufgenommen und als zylindrische Druckfeder ausgestaltet.

Die Ringwand 2h überragt die erste Gehäusewand 6a in axialer Richtung. Die Ringwand 2h ragt auf der dem Druckring 2b abgewandten Seite der ersten Gehäusewand 6a mit einem ringförmigen Überstand von der ersten Gehäusewand 6a ab.

In der ersten und der zweiten Gehäusewand 6a, 6b ist ein Durchgang 6c ausgebildet, durch welchen Verschmutzungen aus dem Raum austreten können. Der Durchgang 6c ist vorteilhaft auf der dem Gleitring 2 axial abgewandten Seite hinter dem Druckring 2b ausgebildet. Indem der Durchgang 6c in einem unteren Bereich des Gehäuses 6 ausgebildet ist, können bereits eingetretene Verschmutzungen durch Schwerkraft aus dem Raum austreten.

Der Gegenring 1 ist aus Metall gefertigt und weist einen Durchmesser (Innenmass) von 300 mm auf. Der Gleitring 2 ist aus einem Kohlewerkstoff gefertigt.

Der rotierende Gegenring 1 ist einer drehenden Welle 5 fest zugeordnet und rotiert mit dieser. Der stationäre Gleitring 2 ist in einem Gehäuse 6 lose zentriert angeordnet. Hierbei wird ein Dichtspalt 7 zwischen den Dichtflächen 1 a, 2a ausgebildet.

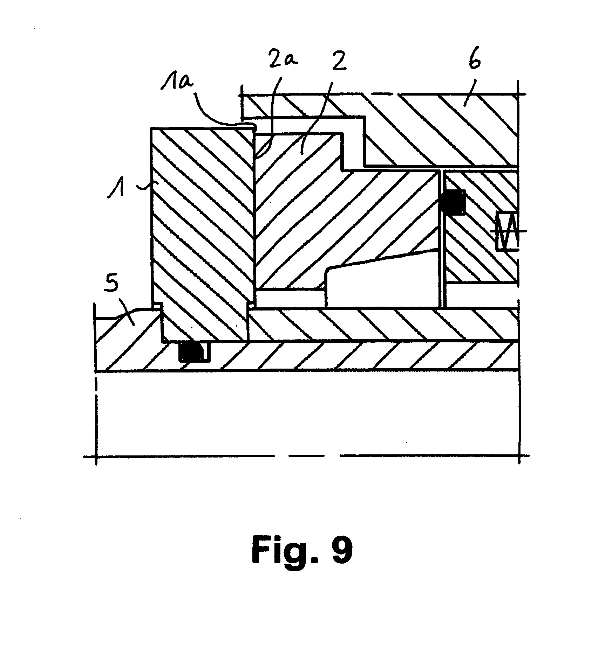

Fig. 9 zeigt eine Gleitringdichtung des Stands der Technik.

Die in Fig. 9 gezeigte Gleitringdichtung umfasst einen rotierenden Gegenring 1 und einen stationären Gleitring 2, wobei der Gegenring 1 und der Gleitring 2 jeweils aneinander liegende Dichtflächen 1 a, 2a aufweisen, wobei die Dichtfläche 1a des Gegenrings 1 der Dichtfläche 2a des Gleitrings 2 gegenüberliegt.

Der rotierende Gegenring 1 ist einer drehenden Welle 5 fest zugeordnet und rotiert mit dieser. Der stationäre Gleitring 2 ist in einem Gehäuse 6 lose zentriert angeordnet.

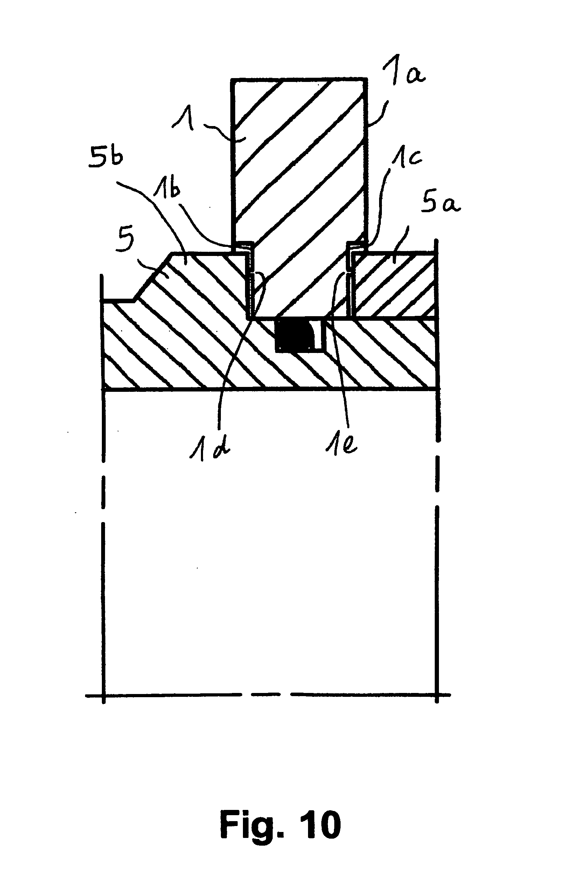

Fig. 10 zeigt den wellenseitigen Teil einer Gleitringdichtung mit analogem Aufbau wie die Gleitringdichtung gemäß Fig. 9, umfassend einen rotierenden Gegenring 1 und einen stationären Gleitring 2, wobei der Gegenring 1 und der Gleitring 2 jeweils aneinander liegende Dichtflächen 1a, 2a aufweisen, wobei die Dichtfläche 1a des Gegenrings 1 der Dichtfläche 2a des Gleitrings 2 axial gegenüberliegt. Der Gegenring 1 weist zwei axial gegenüberliegende Radialebenen 1b, 1c auf von denen jeweils ein Einspannnocken 1d, 1 e in axialer Richtung abragt. Die Einspannnocken 1d, 1e ragen beidseitig vom Gegenring 1 ab.

Die Einspannnocken 1d, 1e sind ringförmig und konzentrisch zum Gegenring 1 ausgebildet. Sie können jedoch auch nur partiell auf den Radialebenen 1b, 1c ausgebildet sein.

Die Radialebenen 1b, 1c sind gegenüber der Dichtfläche 1a sowie der der Dichtfläche 1a gegenüberliegenden Radialebene axial nach innen versetzt.

Die Einspannnocken 1d, 1e sind beidseitig des Gegenrings 1 in radialer Richtung auf gleicher Höhe relativ zur Drehachse der Welle 5 ausgebildet.

Konkret zeigt Fig. 10 den wellenseitigen Teil einer Anordnung, umfassend eine Gleitringdichtung der zuvor beschriebenen Art und eine rotierbare Welle 5, wobei der Gegenring 1 mit der Welle 5 mittels eines Einspannelements 5a und einer Buchse 5b drehfest verbunden ist und wobei ein erster Einspannnocken 1d an der Buchse 5b und der zweite Einspannnocken 1e am Einspannelement 5a anliegt.

Vorteilhaft sind die Einspannnocken 1d, 1 e am Gegenring 1 und nicht an der Buchse 5b und dem Einspannelement 5a ausgebildet. Dies hängt damit zusammen, dass das für den Gegenring 1 verwendete Material weicher ist als die Materialien für die Buchse 5b bzw. das Einspannelement 5a. Des Weiteren wird eine gleichmäßige Abnutzung der Einspannnocken 1d, 1e angestrebt.

Der Gegenring 1 ist aus Metall gefertigt und weist einen Durchmesser (Innenmass) von 300 mm auf.

Der Gleitring 2 ist aus einem Kohlewerkstoff gefertigt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ausdrücklich hervorgehoben, dass alle durch die Beschreibung und/ oder die Patentansprüche offenbarten Ausgestaltungen und Kombinationen von Gleitringdichtungen und Gleitringdichtungsanordnungen offenbart sind, unabhängig von deren konkreter Darstellung in den Figuren.

## Patentansprüche

1. Gleitringdichtung, umfassend einen rotierenden Gegenring (1) und einen stationären Gleitring (2), wobei der Gegenring (1) und der Gleitring (2) jeweils aneinander liegende Dichtflächen (1 a, 2a) aufweisen und wobei die Dichtfläche (1a) des Gegenrings (1) der Dichtfläche (2a) des Gleitrings (2) gegenüberliegt, wobei der Gegenring (1) eine erste axiale Ausstülpung (8) aufweist, welche von einer Radialebene (9) des Gegenrings (1) abragt, **dadurch gekennzeichnet, dass** der Gegenring (1) eine zweite axiale Ausstülpung (10) aufweist, welche von der Radialebene (9) abragt und von der ersten Ausstülpung (8) beabstandet ist.

2. Gleitringdichtung nach Anspruch **1, dadurch gekennzeichnet, dass** die Radialebene (9) der Dichtfläche (1 a) des Gegenrings (1) abgewandt ist.

3. Gleitringdichtung nach Anspruch **1** oder **2, dadurch gekennzeichnet, dass** die erste Ausstülpung (8) am radial äußeren Ende des Gegenrings (1) ausgebildet ist und dass die zweite Ausstülpung (10) dem radial inneren Ende des Gegenrings (1) zugewandt ist.

4. Gleitringdichtung nach einem der Ansprüche **1** bis **3, dadurch gekennzeichnet, dass** die erste Ausstülpung (8) im Querschnitt trapezförmig ausgebildet ist.

5. Gleitringdichtung nach einem der Ansprüche **1** bis **4, dadurch gekennzeichnet, dass** die zweite Ausstülpung (10) im Querschnitt trapezförmig ausgebildet ist.

6. Gleitringdichtung nach einem der Ansprüche **1** bis **5, dadurch gekennzeichnet, dass** die Ausstülpungen (8, 10) abgerundete Kanten (12a, 12b) aufweisen.

7. Gleitringdichtung nach einem der Ansprüche **1** bis **6, dadurch gekennzeichnet, dass** die erste Ausstülpung (8) eine größere Ausdehnung zeigt als die zweite Ausstülpung (10).

8. Gleitringdichtung nach einem der Ansprüche 1 bis **7, dadurch gekennzeichnet, dass** der Gleitring (2) eine axiale Ausbuchtung (13) aufweist, deren radial innere Flanke (14) Ausnehmungen (15a, 15b) aufweist.

9. Gleitringdichtung nach Anspruch **8, dadurch gekennzeichnet, dass** die radial innere Flanke (14) gestuft ausgebildet ist.

10. Gleitringdichtung nach Anspruch **8** oder **9, dadurch gekennzeichnet, dass** die radial innere Flanke (14) in eine erste Radialebene (16) des Gleitrings (2) mündet, wobei eine radial äußere Flanke (17) des Gleitrings (2) in eine zweite Radialebene (18) des Gleitrings (2) mündet und wobei die erste und die zweite Radialebene (16, 18) unterschiedlich weit von der Dichtfläche (2a) des Gleitrings (2) beabstandet sind.

11. Gleitringdichtung nach einem der voranstehenden Ansprüche, **dadurch gekennzeichnet, dass** der Gleitring (2) durch einen Druckring (2b) gegen den Gegenring (1) gepresst ist, wobei sich der Druckring (2b) mittels eines Federelements (2c) gegen eine erste Gehäusewand (6a) abstützt, wobei zwischen dem Druckring (2b) und einer zweiten Gehäusewand (6b) sowie zwischen dem Druckring (2b) und dem Gleitring (2) eine Dichteinrichtung (2d, 2e) vorgesehen ist und wobei die Dichteinrichtung (2d, 2e) zwei voneinander entkoppelte und separate Dichtelemente (2d, 2e) aufweist.

12. Gleitringdichtung nach Anspruch **11, dadurch gekennzeichnet, dass** ein erstes Dichtelement (2e) ausschließlich am Gleitring (2) und am Druckring (2b) anliegt.

13. Gleitringdichtung nach Anspruch **11** oder **12, dadurch gekennzeichnet, dass** ein zweites Dichtelement (2d) ausschließlich am Druckring (2b) und an der zweiten Gehäusewand (6b) anliegt.

14. Gleitringdichtung nach einem der Ansprüche **11** bis **13, dadurch gekennzeichnet, dass** das erste Dichtelement (2e) aus einem Elastomer gefertigt ist.

15. Gleitringdichtung nach einem der Ansprüche **11** bis **14, dadurch gekennzeichnet, dass** das zweite Dichtelement (2d) aus PTFE gefertigt ist.

16. Gleitringdichtung nach einem der Ansprüche **11** bis **15, dadurch gekennzeichnet, dass** das zweite Dichtelement (2d) zumindest bereichsweise im Querschnitt U-förmig ausgestaltet ist.

17. Gleitringdichtung nach einem der voranstehenden Ansprüche, **dadurch gekennzeichnet, dass** der Gleitring (2) durch einen Druckring (2b) gegen den Gegenring (1) gepresst ist, wobei sich der Druckring (2b) mittels eines Federelements (2c) gegen eine erste Gehäusewand (6a) abstützt, wobei zwischen dem Druckring (2b) und einer zweiten Gehäusewand (6b) sowie zwischen dem Druckring (2b) und dem Gleitring (2) eine Dichteinrichtung (2d) vorgesehen ist und wobei der Druckring (2b) gemeinsam mit den Gehäusewänden (6a, 6b) einen Raum begrenzt, der gegen eindringende Verschmutzungen abgeschirmt ist.

18. Gleitringdichtung nach Anspruch **17, dadurch gekennzeichnet, dass** der Druckring (2b) eine axial abragende Ringwand (2h) aufweist, deren radial äußere Oberfläche dem radial inneren Ende der ersten Gehäusewand (6a) gegenüberliegt.

19. Gleitringdichtung nach Anspruch **17** oder **18, dadurch gekennzeichnet, dass** die Ringwand (2h) die erste Gehäusewand (6a) in axialer Richtung überragt.

20. Gleitringdichtung nach einem der Ansprüche **17** bis **19, dadurch gekennzeichnet, dass** in der ersten und/ oder der zweiten Gehäusewand (6a, 6b) ein Durchgang (6c) ausgebildet ist, durch welchen Verschmutzungen aus dem Raum austreten können.

21. Gleitringdichtung nach einem der voranstehenden Ansprüche, **dadurch gekennzeichnet, dass** der Gegenring (1) zwei Radialebenen (1b, 1c) aufweist, denen jeweils ein Einspannnocken (1d, 1 e) zugeordnet ist.

22. Gleitringdichtung nach Anspruch **21, dadurch gekennzeichnet, dass** der Gegenring (1) zwei Radialebenen (1b, 1 c) aufweist, von denen jeweils ein Einspannnocken (1d, 1e) in axialer Richtung abragt.

23. Gleitringdichtung nach Anspruch **21** oder **22**, **dadurch gekennzeichnet, dass** die Einspannnocken (1d, 1e) ringförmig und konzentrisch zum Gegenring (1) ausgebildet sind.

24. Gleitringdichtung nach einem der Ansprüche **21** bis **23**, **dadurch gekennzeichnet, dass** die Einspannnocken (1d, 1e) beidseitig des Gegenrings (1) in radialer Richtung auf gleicher Höhe ausgebildet sind.

25. Anordnung, umfassend eine Gleitringdichtung nach einem der voranstehenden Ansprüche und eine Welle (5), wobei der Gegenring (1) mit der Welle (5) mittels eines Einspannelements (5a) und einer Buchse (5b) drehfest verbunden ist und wobei ein erster Einspannnocken (1d) an der Buchse (5b) und der zweite Einspannnocken (1e) am Einspannelement (5a) anliegt.

## Claims

1. Slip ring seal comprising a rotating counterpart ring (1) and a stationary slip ring (2), wherein the counterpart ring (1) and the slip ring (2) have sealing faces (1a, 2a) which respectively bear against one another and wherein the sealing face (1a) of the counterpart ring (1) lies opposite the sealing face (2a) of the slip ring (2), wherein the counterpart ring (1) has a first axial protuberance (8) which projects from a radial plane (9) of the counterpart ring (1), **characterized in that** the counterpart ring (1) has a second axial protuberance (10) which projects from the radial plane (9) and is spaced apart from the first protuberance (8).

2. Slip ring seal according to Claim 1, **characterized in that** the radial plane (9) faces away from the sealing face (1a) of the counterpart ring (1).

3. Slip ring seal according to Claim 1 or 2, **characterized in that** the first protuberance (8) is formed on the radially outer end of the counterpart ring (1) and **in that** the second protuberance (10) faces the radially inner end of the counterpart ring (1).

4. Slip ring seal according to one of Claims 1 to 3, **characterized in that** the first protuberance (8) is of trapezoidal cross section.

5. Slip ring seal according to one of Claims 1 to 4, **characterized in that** the second protuberance (10) is of trapezoidal cross section.

6. Slip ring seal according to one of Claims 1 to 5, **characterized in that** the protuberances (8, 10) have rounded edges (12a, 12b).

7. Slip ring seal according to one of Claims 1 to 6, **characterized in that** the first protuberance (8) extends further than the second protuberance (10).

8. Slip ring seal according to one of Claims 1 to 7, **characterized in that** the slip ring (2) has an axial bulge (13), the radially inner flank (14) of which has recesses (15a, 15b).

9. Slip ring seal according to Claim 8, **characterized in that** the radially inner flank (14) is of a stepped design.

10. Slip ring seal according to Claim 8 or 9, **characterized in that** the radially inner flank (14) transitions into a first radial plane (16) of the slip ring (2), wherein a radially outer flank (17) of the slip ring (2) transitions into a second radial plane (18) of the slip ring (2) and wherein the first and second radial planes (16, 18) are at different distances from the sealing face (2a) of the slip ring (2).

11. Slip ring seal according to one of the preceding claims, **characterized in that** the slip ring (2) is pressed against the counterpart ring (1) by means of a thrust ring (2b), wherein the thrust ring (2b) braces itself against a first housing wall (6a) by means of a spring element (2c), wherein a sealing device (2d, 2e) is provided between the thrust ring (2b) and a second housing wall (6b) and between the thrust ring (2b) and the slip ring (2), and wherein the sealing device (2d, 2e) has two sealing elements (2d, 2e) which are separate and decoupled from each other.

12. Slip ring seal according to Claim 11, **characterized in that** a first sealing element (2e) bears exclusively against the slip ring (2) and against the thrust ring (2b).

13. Slip ring seal according to Claim 11 or 12, **characterized in that** a second sealing element (2d) bears exclusively against the thrust ring (2b) and against the second housing wall (6b).

14. Slip ring seal according to one of Claims 11 to 13, **characterized in that** the first sealing element (2e) is made of an elastomer.

15. Slip ring seal according to one of Claims 11 to 14, **characterized in that** the second sealing element (2d) is made of PTFE.

16. Slip ring seal according to one of Claims 11 to 15, **characterized in that** the second sealing element (2d) is, at least in part, of U-shaped cross section.

17. Slip ring seal according to one of the preceding claims, **characterized in that** the slip ring (2) is pressed against the counterpart ring (1) by means of a thrust ring (2b), wherein the thrust ring (2b) braces itself against a first housing wall (6a) by means of a spring element (2c), wherein a sealing device (2d) is provided between the thrust ring (2b) and a second housing wall (6b) and between the thrust ring (2b) and the slip ring (2), and wherein the thrust ring (2b) together with the housing walls (6a, 6b) delimits a space which is protected from the ingress of dirt.

18. Slip ring seal according to Claim 17, **characterized in that** the thrust ring (2b) has an axially projecting annular wall (2h), the radially outer surface of which lies opposite the radially inner end of the first housing wall (6a).

19. Slip ring seal according to Claim 17 or 18, **characterized in that** the annular wall (2h) projects beyond the first housing wall (6a) in the axial direction.

20. Slip ring seal according to one of Claims 17 to 19, **characterized in that** in the first and/or the second housing wall (6a, 6b) there is formed a passage (6c) through which dirt can leave the space.

21. Slip ring seal according to one of the preceding claims, **characterized in that** the counterpart ring (1) has two radial planes (1b, 1c), each of which has assigned thereto one clamping cam (1d, 1e).

22. Slip ring seal according to Claim 21, **characterized in that** the counterpart ring (1) has two radial planes (1b, 1c), from each of which one clamping cam (1d, 1e) projects in the axial direction.

23. Slip ring seal according to Claim 21 or 22, **characterized in that** the clamping cams (1d, 1e) are annular and concentric with the counterpart ring (1).

24. Slip ring seal according to one of Claims 21 to 23, **characterized in that** the clamping cams (1d, 1e) are formed on both sides of the counterpart ring (1) at the same height in the radial direction.

25. Arrangement comprising a slip ring seal according to one of the preceding claims and a shaft (5), wherein the counterpart ring (1) is rotationally securely attached to the shaft (5) by means of a clamping element (5a) and a bushing (5b), and wherein a first clamping cam (1d) bears against the bushing (5b) and the second clamping cam (1e) bears against the clamping element (5a).

## Revendications

1. Garniture mécanique d'étanchéité, comprenant une bague conjuguée rotative (1) et une bague de glissement stationnaire (2), la bague conjuguée (1) et la bague de glissement (2) présentant chacune des surfaces d'étanchéité en appui l'une contre l'autre (1a, 2a) et la surface d'étanchéité (1a) de la bague conjuguée (1) étant en regard de la surface d'étanchéité (2a) de la bague de glissement (2), la bague conjuguée (1) présentant une première protubérance axiale (8) qui fait saillie depuis un plan radial (9) de la bague conjuguée (1), **caractérisée en ce que** la bague conjuguée (1) présente une deuxième protubérance axiale (10) qui fait saillie depuis le plan radial (9) et qui est espacée de la première protubérance (8).

2. Garniture mécanique d'étanchéité selon la revendication 1, **caractérisée en ce que** le plan radial (9) est opposé à la surface d'étanchéité (1a) de la bague conjuguée (1).

3. Garniture mécanique d'étanchéité selon la revendication 1 ou 2, **caractérisée en ce que** la première protubérance (8) est réalisée à l'extrémité radialement externe de la bague conjuguée (1) et **en ce que** la deuxième protubérance (10) est tournée vers l'extrémité radialement interne de la bague conjuguée (1).

4. Garniture mécanique d'étanchéité selon l'une quelconque des revendications 1 à 3, **caractérisée en ce que** la première protubérance (8) a une section transversale trapézoïdale.

5. Garniture mécanique d'étanchéité selon l'une quelconque des revendications 1 à 4, **caractérisée en ce que** la deuxième protubérance (10) a une section transversale trapézoïdale.

6. Garniture mécanique d'étanchéité selon l'une quelconque des revendications 1 à 5, **caractérisée en ce que** les protubérances (8, 10) présentent des arêtes arrondies (12a, 12b).

7. Garniture mécanique d'étanchéité selon l'une quelconque des revendications 1 à 6, **caractérisée en ce que** la première protubérance (8) présente une plus grande étendue que la deuxième protubérance (10).

8. Garniture mécanique d'étanchéité selon l'une quelconque des revendications 1 à 7, **caractérisée en ce que** la bague de glissement (2) présente un bombement axial (13), dont le flanc radialement interne (14) présente des évidements (15a, 15b).

9. Garniture mécanique d'étanchéité selon la revendication 8, **caractérisée en ce que** le flanc radialement interne (14) est réalisé sous forme étagée.

10. Garniture mécanique d'étanchéité selon la revendication 8 ou 9, **caractérisée en ce que** le flanc radialement interne (14) débouche dans un premier plan radial (16) de la bague de glissement (2), un flanc radialement externe (17) de la bague de glissement (2) débouchant dans un deuxième plan radial (18) de la bague de glissement (2), et les premier et deuxième plans radiaux (16, 18) étant espacés à une distance différente de la surface d'étanchéité (2a) de la bague de glissement (2).

11. Garniture mécanique d'étanchéité selon l'une quelconque des revendications précédentes, **caractérisée en ce que** la bague de glissement (2) est pressée contre la bague conjuguée (1) par une bague de pression (2b), la bague de pression (2b) s'appuyant au moyen d'un élément de ressort (2c) contre une première paroi de boîtier (6a), entre la bague de pression (2b) et une deuxième paroi de boîtier (6b) ainsi qu'entre la bague de pression (2b) et la bague de glissement (2) étant prévu un dispositif d'étanchéité (2d, 2e) et le dispositif d'étanchéité (2d, 2e) présentant deux éléments d'étanchéité (2d, 2e) séparés et désaccouplés l'un de l'autre.

12. Garniture mécanique d'étanchéité selon la revendication 11, **caractérisée en ce qu'**un premier élément d'étanchéité (2e) s'applique exclusivement contre la bague de glissement (2) et contre la bague de pression (2b).

13. Garniture mécanique d'étanchéité selon la revendication 11 ou 12, **caractérisée en ce qu'**un deuxième élément d'étanchéité (2d) s'applique exclusivement contre la bague de pression (2b) et contre la deuxième paroi de boîtier (6b).

14. Garniture mécanique d'étanchéité selon l'une quelconque des revendications 11 à 13, **caractérisée en ce que** le premier élément d'étanchéité (2e) est fabriqué en élastomère.

15. Garniture mécanique d'étanchéité selon l'une quelconque des revendications 11 à 14, **caractérisée en ce que** le deuxième élément d'étanchéité (2d) est fabriqué en PTFE.

16. Garniture mécanique d'étanchéité selon l'une quelconque des revendications 11 à 15, **caractérisée en ce que** le deuxième élément d'étanchéité (2d) est configuré au moins en partie avec une section transversale en forme de U.

17. Garniture mécanique d'étanchéité selon l'une quelconque des revendications précédentes, **caractérisée en ce que** la bague de glissement (2) est pressée contre la bague conjuguée (1) par une bague de pression (2b), la bague de pression (2b) s'appuyant au moyen d'un élément de ressort (2c) contre une première paroi de boîtier (6a), entre la bague de pression (2b) et une deuxième paroi de boîtier (6b) ainsi qu'entre la bague de pression (2b) et la bague de glissement (2) étant prévu un dispositif d'étanchéité (2d) et la bague de pression (2b) limitant conjointement avec les parois de boîtier (6a, 6b) un espace qui est protégé contre la pénétration de saletés.

18. Garniture mécanique d'étanchéité selon la revendication 17, **caractérisée en ce que** la bague de pression (2b) présente une paroi annulaire saillant axialement (2h), dont la surface radialement externe est opposée à l'extrémité radialement interne de la première paroi de boîtier (6a).

19. Garniture mécanique d'étanchéité selon la revendication 17 ou 18, **caractérisée en ce que** la paroi annulaire (2h) dépasse dans la direction axiale au-delà de la première paroi de boîtier (6a).

20. Garniture mécanique d'étanchéité selon l'une quelconque des revendications 17 à 19, **caractérisée en ce que** dans la première et/ou la deuxième paroi de boîtier (6a, 6b) est réalisé un passage (6c) à travers lequel les saletés peuvent sortir de l'espace.

21. Garniture mécanique d'étanchéité selon l'une quelconque des revendications précédentes, **caractérisée en ce que** la bague conjuguée (1) présente deux plans radiaux (1b, 1c) auxquels est à chaque fois associée une came de serrage (1d, 1e).

22. Garniture mécanique d'étanchéité selon la revendication 21, **caractérisée en ce que** la bague conjuguée (1) présente deux plans radiaux (1b, 1c) depuis lesquels à chaque fois une came de serrage (1d, 1e) fait saillie dans la direction axiale.

23. Garniture mécanique d'étanchéité selon la revendication 21 ou 22, **caractérisée en ce que** les cames de serrage (1d, 1e) sont réalisées sous forme annulaire et de manière concentrique par rapport à la bague conjuguée (1).

24. Garniture mécanique d'étanchéité selon l'une quelconque des revendications 21 à 23, **caractérisée en ce que** les cames de serrage (1d, 1e) sont réalisées des deux côtés de la bague conjuguée (1) à la même hauteur dans la direction radiale.

25. Agencement, comprenant une garniture mécanique d'étanchéité selon l'une quelconque des revendications précédentes et un arbre (5), la bague conjuguée (1) étant connectée de manière solidaire en rotation à l'arbre (5) au moyen d'un élément de serrage (5a) et d'une douille (5b) et une première came de serrage (1d) s'appliquant contre la douille (5b) et la deuxième came de serrage (1e) s'appliquant contre l'élément de serrage (5a).
